# FASCICULE DE BREVET EUROPEEN

(11) **EP 0 614 808 B1**
(45) Date de publication et mention de la délivrance du brevet: **28.05.1997**
(21) Numéro de dépôt: 94400490.2
(22) Date de dépôt: 08.03.1994
(51) Int. Cl.: B64G 1/58, C04B 35/82

(54) **Procédé de fabrication d'éléments de protection thermique, en particulier pour avions spatiaux**
Verfahren zum Herstellen von Wärmeschutzelementen, insbesondere für Raumfahrzeuge
Process for the production of thermal protection elements, especially for spacecraft

(30) Priorité: 09.03.1993 FR 9302703
(43) Date de publication de la demande: 14.09.1994
(73) Titulaire: SOCIETE EUROPEENNE DE PROPULSION, 92150 Suresnes (FR)
(72) Inventeur: Lacombe, Alain, F-33600 Pessac (FR); Rouges, Jean-Michel, F-33700 Merignac (FR)
(74) Mandataire: Joly, Jean-Jacques

(56) Documents cités:
- EP-A- 0 245 644
- FR-A- 2 657 675
- GB-A- 2 102 106
- US-A- 4 456 208

## Description

La présente invention concerne la fabrication d'éléments de protection thermique plus particulièrement destinés à des structures susceptibles d'être exposées à des températures de surface très élevées, typiquement supérieures à 1000°C, pouvant atteindre jusqu'à 1800°C.

Un domaine (non exclusif) d'application de l'invention est la réalisation d'éléments de protection thermique pour des avions spatiaux. Ceux-ci, lors de leur rentrée dans l'atmosphère, sont soumis à un échauffement superficiel important, la température de surface de certaines parties, telles que le nez et les bords d'attaque des ailes pouvant atteindre 1300 à 1400°C.

Les protections thermiques connues sont généralement de deux types: les protections ablatives qui absorbent l'énergie thermique par destruction progressive de leur matériau constitutif et les protections radiantes qui évacuent l'énergie thermique par rayonnement.

Les protections ablatives présentent comme inconvénients le fait de ne pas être réutilisables et de provoquer une variation de forme en cours d'utilisation. C'est pourquoi, pour des applications telles que des avions spatiaux , il est fait appel à des protections radiantes capables de supporter des températures élevées.

Ainsi, il est bien connu de garnir la surface d'un avion spatial à protéger par des tuiles ou pavés en matière céramique isolante. Les tuiles sont collées avec interposition d'une couche d'un matériau formant adaptateur de déformations entre les tuiles et la structure froide à protéger. Cette solution présente plusieurs inconvénients.

Les tuiles en matière céramique sont sensibles aux impacts avec risque important d'éclatement. De plus, elles ne supportent pas toujours les déformations de la structure froide qui les porte, en dépit de la présence d'un matériau adaptateur de déformations. La technique de collage des tuiles est délicate et ne présente pas un très haut degré de fiabilité, et les opérations de démontage et remplacement de tuiles endommagées sont longues et délicates. En outre, il est nécessaire de conférer à la structure porteuse froide une forme qui reproduit la forme aérodynamique souhaitée, celle-ci étant définie par les tuiles collées sur la structure froide et assurant une double fonction de carénage et d'isolation.

Pour éviter ces inconvénients, il est proposé dans le document FR A 2 657 675 d'utiliser un élément de protection thermique comprenant un panneau en matériau composite thermostructural en forme de coque rempli d'un matériau d'isolation thermique et pouvant être fixé sur une structure porteuse froide au moyen d'organes de fixation mécanique. Les panneaux sont juxtaposés avec interposition de joints pour former une surface extérieure sensiblement continue, I'accès aux organes de fixation mécanique étant possible de l'extérieur par déformation des joints.

Avec un tel concept, les fonctions de carénage, d'isolation et de tenue mécanique de la structure porteuse sont découplées. Le carénage est défini par les panneaux, sans qu'il soit nécessaire que la structure porteuse le reproduise, tandis que l'isolation est apportée au moins en partie par l'isolant inséré entre les panneaux et la structure porteuse.

En outre, les organes de fixation mécanique autorisent une liaison par visserie, ce qui permet de s'affranchir du collage et facilite grandement le démontage et le remplacement d'un panneau.

Enfin, les panneaux en matériau composite thermostructural, par exemple en matériau composite à matrice céramique, ont une meilleure résistance à l'impact que les céramiques massives. En particulier, le risque d'éclatement est pratiquement inexistant.

Toutefois, la fabrication des panneaux en matériau composite thermostructural est longue, délicate et onéreuse.

Les matériaux composites thermostructuraux, c'est-à-dire les matériaux composites dont les propriétés mécaniques les rendent aptes à constituer des éléments de structure et qui conservent ces propriétés jusqu'à des températures élevées sont typiquement les matériaux composites carbone-carbone (C-C), constitués d'une texture de renfort ou préforme en fibres de carbone densifiée par une matrice en carbone, et les matériaux composites à matrice céramique (CMC) constitués d'une texture de renfort ou préforme en fibres réfractaires (fibres en carbone ou céramique) densifiée par une matrice céramique.

Pour fabriquer un panneau en matériau composite thermostructural, on réalise d'abord une préforme fibreuse, par exemple par drapage de strates de tissu, le nombre de strates superposées étant choisi en fonction de l'épaisseur désirée pour le panneau. Les strates sont drapées sur un élément d'outillage dont la forme reproduit celle du panneau à réaliser.

La densification du panneau est réalisée par voie liquide (imprégnation) ou par voie gazeuse (infiltration chimique en phase vapeur). Dans le premier cas, la préforme fibreuse est imprégnée par un précurseur liquide du matériau de la matrice, la transformation du précurseur étant généralement ensuite obtenue par traitement thermique. Dans le deuxième cas, la préforme fibreuse est placée dans une enceinte dans laquelle est admise une phase gazeuse qui forme un dépôt sur les fibres, au sein de la préforme, par décomposition ou par réaction entre les constituants de la phase gazeuse, dans des conditions prédéterminées de température et de pression. Ces techniques de densification par voie liquide ou gazeuse pour former des matrices carbone ou céramique sont bien connues.

Pendant la phase de densification, il est souvent nécessaire de maintenir la préforme fibreuse dans la forme voulue, ce qui nécessite l'utilisation d'outillages. Lorsque la forme du produit à réaliser est complexe, ce qui est le cas des panneaux évoqués plus haut ayant une forme de coque, avec des parties de liaison avec les organes de fixation, il est nécessaire d'utiliser des outillages spécifiques. Ceux-ci doivent en outre être en un matériau capable de résister aux températures atteintes lors du processus de densification et neutre vis-à-vis des matériaux constitutifs de la préforme, de la matrice et des précurseurs de celle-ci. Typiquement, pour la densification par infiltration chimique en phase vapeur, on a recours à des outillages en graphite qui sont lourds, encombrants et très onéreux.

En outre, après la réalisation des panneaux, il est nécessaire de mettre en place l'isolant thermique qui les remplit. Or, l'isolant thermique envisagé dans le document précité FR-A 2 657 675 est un isolant du type à écrans multiples, formé d'un empilement de feuilles de céramique à placage métallique. Un tel isolant est fragile, très délicat à mettre en oeuvre dans des réceptacles de formes complexes et sensible à l'humidité.

L'invention a pour but de fournir un procédé permettant de réaliser un élément de protection thermique du type panneau rigide creux en matériau composite thermostructural rempli d'un isolant thermique, sans rencontrer les inconvénients mentionnés ci-avant. En particulier, l'invention a pour but de simplifier le procédé de fabrication d'un tel élément de protection thermique tout en utilisant un matériau d'isolation thermique moins fragile que les matériaux à écrans réfléchissants multiples.

Ce but est atteint, conformément à l'invention, par un procédé comprenant les étapes suivantes:
- réaliser un bloc rigide de matériau isolant thermique de faible densité, le bloc ayant une surface externe dont la forme correspond à celle d'une surface interne du panneau, et
- réaliser le panneau en matériau composite thermostructural directement sur le bloc.

Ainsi, l'invention est remarquable en ce que l'isolant thermique est constitué par un bloc rigide qui peut être aisément moulé ou usiné à la forme voulue et qui constitue un élément d'outillage pour la réalisation du panneau en matériau composite. Le procédé de fabrication de l'élément de protection thermique formé du panneau et de l'isolant est donc grandement simplifié.

La réalisation du panneau en matériau composite met en oeuvre la technique d'infiltration chimique en phase vapeur ou la technique d'imprégnation liquide.

Dans le premier cas, on forme sur le bloc d'isolant thermique une préforme fibreuse constituant le renfort du matériau composite, par exemple par drapage de strates fibreuses bidimensionnelles, et on densifie la préforme par le matériau constitutif de la matrice. La densification est réalisée tout en maintenant la préforme dans la forme voulue correspondant à celle du panneau à réaliser. A cet effet, la préforme est maintenue entre le bloc d'isolant thermique et un élément d'outillage complémentaire. En variante, le maintien de la préforme peut être assuré par fixation de celle-ci sur le bloc d'isolant thermique, par exemple au moyen d'une strate de conformation liée sur le bloc.

Dans le deuxième cas, on drape sur le bloc d'isolant thermique des strates fibreuses bidimensionnelles pré-imprégnées par un précurseur de la matrice du matériau composite et on transforme le précurseur pour obtenir le matériau constitutif de la matrice, la transformation étant généralement obtenue par traitement thermique.

Le bloc d'isolant thermique est réalisé en un matériau de faible densité, de préférence en un matériau dont la masse volumique est inférieure à 50 kg/m³. On pourra utiliser un bloc de céramique poreuse, par exemple un bloc de céramique poreuse de type silico-alumineux, éventuellement renforcée par des fibres courtes en céramique (silice ou alumine). En raison de la porosité du bloc d'isolant, il est préférable de protéger sa surface externe afin d'éviter une densification du bloc par le matériau constitutif de la matrice du matériau composite du panneau. Cette protection est obtenue par formation d'une couche étanche de scellement sur la surface externe du bloc, par exemple une couche de ciment céramique, ou au moyen d'une feuille d'interposition non poreuse.

L'invention sera mieux comprise à la lecture de la description faite ci-après, à titre indicatif mais non limitatif, en référence aux dessins annexés sur lesquels:
- la figure 1 est une vue schématique en perspective d'un système de protection thermique connu pour un avion spatial;
- la figure 2 est une vue en coupe montrant la fixation des éléments du système de protection thermique de la figure 1;
- les figures 3A à 3D illustrent les étapes successives de fabrication d'un élément de protection thermique tel que montré par les figures 1 et 2, selon un premier mode de mise en oeuvre de l'invention;
- la figure 4 illustre une variante d'une étape du procédé montré par les figures 3A-à 3D ; et
- les figures 5A à 5C illustrent les étapes successives de fabrication d'un élément de protection thermique selon un deuxième mode de mise en oeuvre de l'invention.

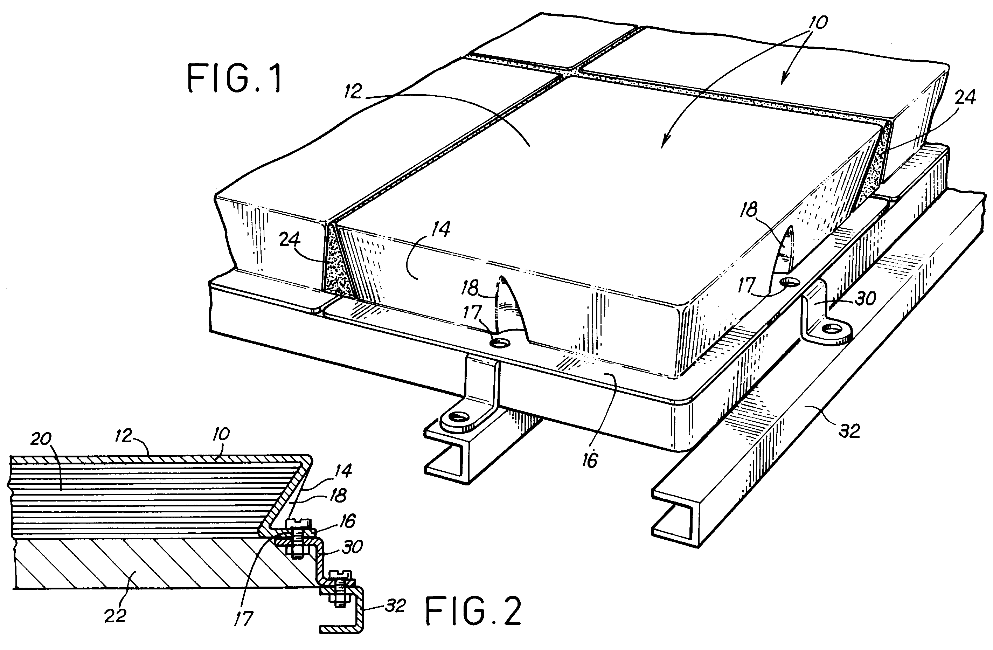

Les figures 1 et 2 montrent schématiquement un système de protection thermique tel que décrit notamment dans le document FR-A-2 657 675 et destiné à la protection de la structure d'un avion spatial.

La protection thermique est constituée d'éléments juxtaposés comportant un panneau rigide creux 10, en forme de coque, rempli d'un isolant thermique 20. Le panneau 10 est de forme sensiblement parallélépipédique avec une face externe 12 et des flancs 14 terminés par des rebords 16. La fixation sur la structure à protéger est assurée par des supports 30 sur lesquels s'appuient les rebords 16. Les liaisons entre les rebords 16 et les supports 30, et entre les supports 30 et les longerons 32 de la structure à protéger sont assurées de façon conventionnelle par visserie. A cet effet, des trous 17 sont formés dans les rebords 16, au milieu de ceux-ci. Les flancs 14 présentent des parties en creux ou cavités 18, au niveau des trous 17 afin de faciliter l'accès aux vis insérées dans ces trous. Une couche d'isolation thermique supplémentaire 22 est interposée entre les panneaux remplis de l'isolant 20 et la structure à protéger.

Les faces externes 12 des panneaux 10 juxtaposés définissent le carénage de l'avion spatial. Comme le montre la figure 2, les flancs 14 des panneaux 10 sont légèrement inclinés par rapport à la normale aux faces 12 afin de définir, entre panneaux adjacents, des intervalles de largeur croissante à partir des faces externes 12, en direction de la structure à protéger. Ces intervalles sont garnis de joints 24 qui, par leur déformation, autorisent le passage d'un outil pour accéder aux vis de liaison entre les rebords 16 et les supports 30.

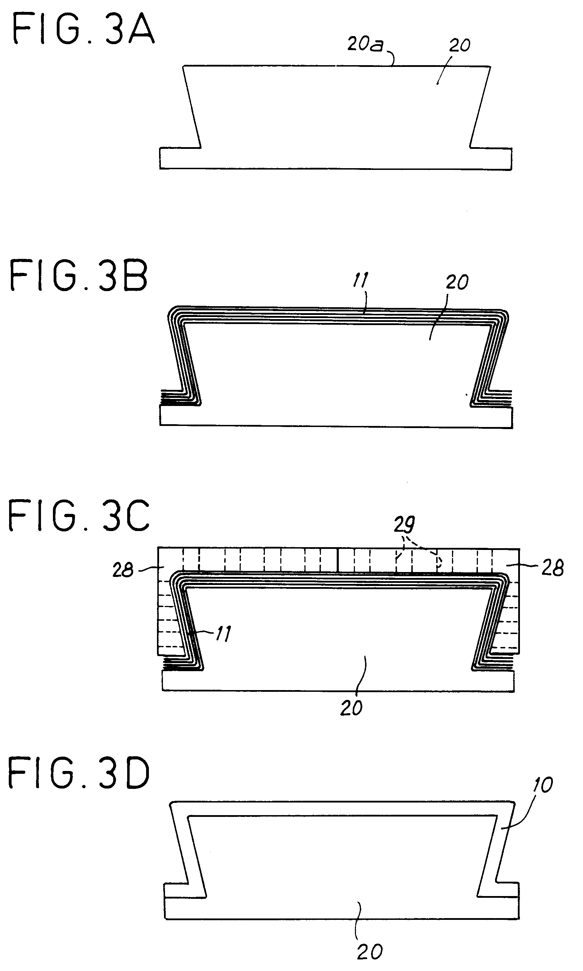

Un procédé conforme à l'invention pour la réalisation d'un élément de protection thermique constitué d'un panneau 10 en matériau composite thermostructural et d'un isolant thermique 20 remplissant le panneau 10, sera maintenant décrit en référence aux figures 3A à 3D.

Selon ce procédé, un bloc rigide 20 de matériau isolant est d'abord réalisé et le panneau 10 en matériau composite est fabriqué directement sur le bloc 20 formant élément d'outillage pour la réalisation du panneau.

Le bloc 20 est obtenu par usinage ou par moulage de manière à présenter une surface externe dont la forme correspond à celle du panneau avec des flancs et des rebords correspondant à ceux du panneau (figure 3A). Par rapport à la figure 1, le bloc remplace l'isolant logé à l'intérieur du panneau et au moins une partie de la couche isolante 22 située sous le panneau. Le bloc 20 est de préférence en une céramique poreuse par exemple de type silico-alumineux. La fabrication de telles céramiques poreuses de faible densité est bien connue. De préférence, on utilise pour le bloc 20 une céramique poreuse ayant une masse volumique inférieure à 50 kg/m³.

Le bloc 20 peut être obtenu par découpage et usinage à partir d'un bloc préfabriqué de plus grandes dimensions. En variante, le bloc 20 est moulé, par exemple par moulage et frittage sous vide d'une composition, telle qu'un gel précurseur de la céramique. Des fibres courtes de renforcement peuvent être introduites dans la céramique poreuse, au stade précurseur, telles que des fibres de silice ou d'alumine.

De préférence, la porosité de surface du bloc est obturée pour éviter une densification du bloc par la matrice du matériau constitutif du panneau lors de la fabrication de ce dernier directement sur le bloc. Cela peut être obtenu en formant à la surface du bloc 20 une couche de scellement étanche 20a en un ciment céramique par enduction ou pulvérisation. En variante, l'étanchéification du bloc peut être réalisée en le recouvrant d'une strate non poreuse, par exemple une feuille céramique collée.

L'étape suivante consiste à former, sur le bloc 20, une préforme fibreuse destinée à constituer le renfort fibreux du matériau composite du panneau 10. La préforme est en fibres réfractaires, telles que des fibres de carbone ou des fibres céramiques (par exemple des fibres de carbure de silicium). La préforme est formée par drapage de strates fibreuses bidimensionnelles 11, par exemple des couches de tissu superposées (figure 3B). Des strates supplémentaires de plus petites dimensions peuvent être ajoutées dans certaines parties de la préforme afin d'augmenter l'épaisseur du panneau dans ces parties, notamment dans les parties constituant les zones de fixation du panneau.

Après drapage, la préforme est maintenue dans la forme voulue en étant immobilisée et éventuellement comprimée entre le bloc d'isolant 20 et un élément d'outillage complémentaire 28, par exemple en graphite réalisé en plusieurs parties (figure 3C).

La densification de la préforme par le matériau constitutif de la matrice du matériau composite du panneau est réalisée par infiltration chimique en phase vapeur. La matrice est en matériau réfractaire, par exemple en carbone ou, de préférence, en céramique. Les techniques d'infiltration chimique en phase vapeur de carbone ou de céramique, notamment de carbure de silicium sont bien connues. La préforme, maintenue entre le bloc 20 et l'élément d'outillage 28, est placée dans une enceinte. Une phase gazeuse est admise dans l'enceinte et s'infiltre dans la préforme pour former sur les fibres un dépôt du matériau de la matrice. Ce dépôt se produit par décomposition de la phase gazeuse ou par réaction entre ses constituants dans des conditions déterminées de pression et de température. On notera que l'élément d'outillage 28 est percé de trous 29 facilitant l'accès à la préforme pour la phase gazeuse.

Après densification, on procède à un usinage terminal pour la rectification des faces du panneau 10 et l'aménagement des zones de fixation. On obtient alors un élément de protection thermique prêt à être posé (figure 3D).

Le procédé qui vient d'être décrit permet de réaliser des éléments de protection thermique, dont le panneau, par exemple en composite C-SiC (renfort en fibres de carbone et matrice en carbure de silicium) a une face externe de forme rectangulaire ou carrée dont les côtés peuvent avoir plusieurs centaines de mm de longueur, par exemple environ 300 mm, a une épaisseur qui peut être de l'ordre du mm, voire inférieure à 1 mm, et a des flancs dont la hauteur est de plusieurs dizaines de mm, par exemple de 50 à 120 mm selon le degré d'isolation souhaité.

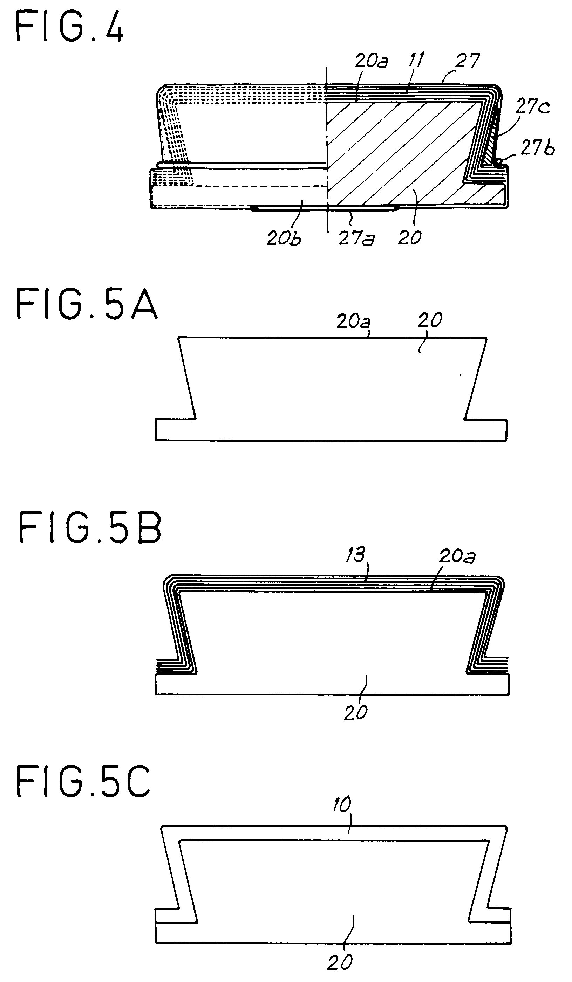

Selon une variante du procédé, le maintien de la préforme dans la forme voulue en vue de sa densification est réalisé au moyen d'une strate de conformation 27 (figure 4). La strate 27 est par exemple une couche de tissu qui est tendue sur la préforme et fixée sur le bloc rigide 20. Le blocage de la strate 27 est obtenu par liage au moyen d'un fil de liage 27a à la face inférieure 20b du bloc 20 et tandis qu'une ligature 27b au niveau de la base des flancs du bloc 20 maintient la préforme appliquée contre ces flancs. Des pièces en forme de coins 27c appliquent les strates dans les parties en creux du bloc correspondant aux cavités 18 des flancs. La strate de conformation 27 est en un matériau dont le coefficient de dilatation thermique est différent de celui du matériau constitutif de la préforme. De la sorte, du fait que la densification par infiltration chimique en phase vapeur est réalisée à une température relativement élevée , la différence de dilatation entre la strate de conformation 27 et la préforme fibreuse se traduit, lors du refroidissement qui suit l'infiltration, par des ruptures au niveau des zones d'interface préforme-strate de conformation. La strate 27 peut alors être facilement séparée du panneau densifié. L'utilisation d'une strate de conformation, qui évite d'avoir à recourir à un élément d'outillage en graphite coûteux et encombrant, est décrite dans le document FR-A-2 659 949.

Dans ce qui précède, il est envisagé de réaliser le panneau composite 10 par infiltration chimique en phase vapeur. Toutefois, le procédé selon l'invention peut aussi être mis en oeuvre en utilisant la technique bien connue d'imprégnation.

Partant d'un bloc 20 (figure 5A) semblable à celui de la figure 3A, on forme le panneau par drapage sur le bloc de strates 13 préimprégnées par un précurseur liquide de la matrice du matériau composite (figure 5B). Pour une matrice carbone, le précurseur est une résine à taux de coke élevé, éventuellement en solution dans un solvant, ou un brai. Pour une matrice céramique, le précurseur peut être un composé inter-métallique liquide, tel qu'un polycarbosilane précurseur du carbure de silicium. La transformation du précurseur pour obtenir le matériau de la matrice est obtenue par thermolyse. Celle-ci peut être réalisée sans qu'il soit nécessaire de maintenir les strates 13 au moyen d'un élément d'outillage complémentaire ou d'une strate de conformation. La couche de scellement étanche 20a peut être limitée aux parties de la surface externe du bloc 20 en contact avec les strates 13.

Après thermolyse, le panneau subit un usinage final, et un élément de protection thermique est obtenu (figure 5C) identique à celui de la figure 3D.

Comme indiqué précédemment, le nombre de strates drapées pourra être supérieur dans certaines parties du panneau afin de conférer à ces parties une plus grande épaisseur et une meilleure tenue mécanique.

## Revendications

1. Procédé pour la fabrication d'un élément de protection thermique comprenant un panneau rigide creux en forme de coque réalisé en un matériau composite thermostructural comportant un renfort fibreux densifié par une matrice, et un isolant thermique remplissant le panneau, procédé caractérisé en ce qu'il comprend les étapes suivantes:
- réaliser un bloc rigide de matériau isolant thermique de faible densité, le bloc ayant une surface externe dont la forme correspond à celle d'une surface interne du panneau, et
- réaliser le panneau en matériau composite thermostructural directement sur le bloc.

2. Procédé selon la revendication 1, caractérisé en ce que la réalisation du panneau en matériau composite thermostructural comprend les étapes suivantes:
- former sur le bloc de matériau isolant une préforme fibreuse constituant le renfort du matériau composite, et
- densifier la préforme fibreuse par le matériau constitutif de la matrice du matériau composite.

3. Procédé selon la revendication 2, caractérisé en ce que la densification de la préforme fibreuse est réalisée tout en maintenant la préforme dans une forme correspondant à celle du panneau à réaliser.

4. Procédé selon la revendication 3, caractérisé en ce que la préforme est maintenue entre le bloc d'isolant thermique et un élément d'outillage complémentaire.

5. Procédé selon la revendication 3, caractérisé en ce que la préforme est maintenue en étant appliquée sur le bloc d'isolant thermique au moyen d'une strate de conformation.

6. Procédé selon l'une quelconque des revendications 2 à 5, caractérisé en ce que la préforme est réalisée par drapage de strates fibreuses bidimensionnelles sur la surface externe du bloc d'isolant thermique.

7. Procédé selon la revendication 1, caractérisé en ce que la réalisation du panneau en matériau composite thermostructural comprend les étapes suivantes:
- draper sur le bloc d'isolant thermique des strates fibreuses bidimensionnelles pré-imprégnées par un précurseur de la matrice du matériau composite, et
- transformer le précurseur pour obtenir le matériau constitutif de la matrice.

8. Procédé selon l'une quelconque des revendications 6 et 7, caractérisé en ce que le nombre de strates drapées varie afin de réaliser un panneau ayant des parties dont l'épaisseur est plus grande que dans le reste du panneau.

9. Procédé selon l'une quelconque des revendications 1 à 8, caractérisé en ce que le bloc d'isolant thermique est poreux.

10. Procédé selon la revendication 9, caractérisé en ce que la surface du bloc d'isolant thermique est protégée pour éviter la densification du bloc par le matériau constitutif de la matrice du matériau composite du panneau.

11. Procédé selon la revendication 10, caractérisé en ce que la protection de la surface du bloc est réalisée par dépôt d'une couche étanche de scellement.

12. Procédé selon la revendication 10, caractérisé en ce que la protection de la surface du bloc est réalisée par mise en place sur le bloc d'une strate d'interposition non poreuse.

13. Procédé selon l'une quelconque des revendications 1 à 12, caractérisé en ce que le bloc d'isolant thermique est en céramique poreuse.

14. Procédé selon l'une quelconque des revendications 1 à 13, caractérisé en ce que le bloc d'isolant thermique est réalisé par moulage d'une composition précurseur de céramique et transformation du précurseur.

15. Procédé selon l'une quelconque des revendications 1 à 14, caractérisé en ce que le bloc d'isolant thermique est réalisé en une céramique poreuse renforcée de fibres.

## Claims

1. A method of manufacturing a thermal shielding element comprising a hollow rigid panel in the form of a shell made of a thermostructural composite material comprising a fiber reinforcement densified by a matrix, and a thermal insulant filling the panel, which method is characterized in that it comprises the following steps:
- making a rigid block of thermally insulating material of low density, the block having an outside surface whose shape corresponds to an inside surface of the panel; and
- making the panel of thermostructural composite material directly on the block.

2. The method according to claim 1, characterized in that the panel of thermostructural composite material is made by applying the following steps:
- a fiber preform constituting the reinforcement of the composite material is formed on the block of insulating material; and
- the fiber preform is densified with the material that constitutes the matrix of the composite material.

3. The method according to claim 2, characterized in that the fiber preform is densified while maintaining the preform in a shape that corresponds to the shape of the panel to be made.

4. The method according to claim 3, characterized in that the preform is held between the block of thermal insulant and a complementary tooling element.

5. The method according to claim 3, characterized in that the preform is held by being pressed against the block of thermal insulant by means of a shaping ply.

6. The method according to any one of claims 2 to 5, characterized in that the preform is made by draping two-dimensional fiber plies over the outside surface of the block of thermal insulant.

7. The method according to claim 1, characterized in that the panel of thermostructural composite material is made by applying the following steps:
- draping over the block of thermal insulant two-dimensional fiber plies preimpregnated with a precursor of the composite material matrix; and
- transforming the precursor to obtain the material that constitutes the matrix.

8. The method according to any one of claims 6 and 7, characterized in that the number of plies draped varies so as to make a panel having portions of greater thickness than the remainder of the panel.

9. The method according to any one of claims 1 to 8, characterized in that the block of thermal insulant is porous.

10. The method according to claim 9, characterized in that the surface of the block of thermal insulant is protected to avoid the block being densified by the material that constitutes the matrix of the composite material of the panel.

11. The method according to claim 10, characterized in that the surface of the block is protected by depositing a sealing layer thereon.

12. The method according to claim 10, characterized in that the surface of the block is protected by installing a non-porous interposition ply on the block.

13. The method according to any one of claims 1 to 12, characterized in that the block of thermal insulant is made of porous ceramic.

14. The method according to any one of claims 1 to 13, characterized in that the block of thermal insulant is made by molding a composition that constitutes a precursor for a ceramic, and by transforming the precursor.

15. The method according to any one of claims 1 to 14, characterized in that the block of thermal insulant is made of a porous ceramic reinforced by fibers.

## Patentansprüche

1. Verfahren zum Herstellen eines Wärmeschutzelements, welches eine starre, hohle Formplatte in Gestalt einer Schale, hergestellt aus einem Thermostruktur-Verbundstoff, der eine durch eine Matrix verdichtete fasrige Verstärkung enthält, und einen die Formplatte ausfüllenden Wärmeisolierstoff aufweist,
**gekennzeichnet** durch folgende Schritte:
Ausbilden eines starten Blocks aus Wärmeisoliermaterial geringer Dichte, wobei der Block eine Außenfläche aufweist, deren Form derjenigen einer Innenfläche der Formplatte entspricht, und
Ausbilden der Formplatte aus Wärmestruktur-Verbundmaterial direkt auf dem Block.

2. Verfahren nach Anspruch 1, dadurch gekennzeichnet, daß die Ausbildung der Formplatte aus Thermostruktur-Verbundmaterial folgende Schritte beinhaltet:
auf dem Isoliermaterialblock wird ein fasriger Vorformling gebildet, der die Verstärkung des Verbundstoffs bildet, und
der fasrige Vorformling wird mit dem Matrixkomponentenmaterial des Verbundstoffs verdichtet.

3. Verfahren nach Anspruch 2, dadurch gekennzeichnet, daß die Verdichtung des fasrigen Vorformlings durchgeführt wird, während der Vorformling in einer Form gehalten wird, die derjenigen der zu bildenden Formplatte entspricht.

4. Verfahren nach Anspruch 3, dadurch gekennzeichnet, daß der Vorformling zwischen dem Block aus Wärmeisolierstoff und einem komplentären Werkzeugelement gehalten wird.

5. Verfahren nach Anspruch 3, dadurch gekennzeichnet, daß der Vorformling dadurch gehalten wird, daß er mit Hilfe einer Formgebungsschicht auf den Block aus Isolierstoff aufgedrückt wird.

6. Verfahren nach einem der Ansprüche 2 bis 5, dadurch gekennzeichnet, daß der Vorformling dadurch gebildet wird, daß zweidimensionale Faserlagen auf die Außenfläche des Isolierstoffblocks aufgelegt werden.

7. Verfahren nach Anspruch 1, dadurch gekennzeichnet, daß die Ausbildung der Formplatte aus Thermostruktur-Verbundstoff folgende Schritte beinhaltet:
auf den Wärmeisolierstoffblock werden zweidimensionale Faserlagen aufgelegt, die mit einem Vorläufermaterial der Matrix des Verbundstoffs vorimprägniert sind, und
das Vorläufermaterial wird umgewandelt, um das Matrixkomponentenmaterial zu erhalten.

8. Verfahren nach einem der Ansprüche 6 und 7, dadurch gekennzeichnet, daß die Anzahl von aufgelegten Lagen variiert, um eine Formplatte zu bilden, die Bereiche enthält, deren Dicke größer ist als die der übrigen Formplatte.

9. Verfahren nach einem der Ansprüche 1 bis 8, dadurch gekennzeichnet, daß der Wärmeisolierstoffblock porös ist.

10. Verfahren nach Anspruch 9, dadurch gekennzeichnet, daß die Oberfläche des Wärmeisolierstoffblocks geschützt wird, um die Verdichtung des Blocks durch das Matrixkomponentenmaterial des Verbundstoffs der Formplatte zu vermeiden.

11. Verfahren nach Anspruch 10, dadurch gekennzeichnet, daß der Schutz der Oberfläche des Blocks realisiert wird durch Niederschlagen einer dichten Siegelschicht.

12. Verfahren nach Anspruch 10, dadurch gekennzeichnet, daß der Schutz der Oberfläche des Blocks realisiert wird durch Aufbringen einer nicht-porösen Lage auf den Block.

13. Verfahren nach einem der Ansprüche 1 bis 12, dadurch gekennzeichnet, daß der Wärmeisolierstoffblock aus poröser Keramik besteht.

14. Verfahren nach einem der Ansprüche 1 bis 13, dadurch gekennzeichnet, daß der Wärmeisolierstoffblock ausgebildet wird durch Formen einer Keramik-Vorläuferzusammensetzung und durch Umwandeln des Vorläufermaterials.

15. Verfahren nach einem der Ansprüche 1 bis 14, dadurch gekennzeichnet, daß der Wärmeisolierstoffblock ausgebildet wird aus einer porösen Keramik, die mit Fasern verstärkt ist.
